# EUROPÄISCHE PATENTSCHRIFT

(11) **EP 3 978 751 B1**
(45) Veröffentlichungstag und Bekanntmachung des Hinweises auf die Patenterteilung: **15.11.2023**
(21) Anmeldenummer: 21186883.1
(22) Anmeldetag: 21.07.2021
(51) Int. Cl.: F04B 43/00, F04B 43/02, F16J 3/02

(54) **VERBUNDMEMBRAN FÜR MEMBRANPUMPEN**
COMPOSITE MEMBRANE FOR MEMBRANE PUMPS
MEMBRANE COMPOSITE POUR POMPES À MEMBRANE

(30) Priorität: 30.09.2020 DE 102020125567
(43) Veröffentlichungstag der Anmeldung: 06.04.2022
(73) Patentinhaber: ULMAN Dichtungstechnik GmbH, 71116 Gärtringen (DE)
(72) Erfinder: Walz, Dominik, 74744 Ahorn-Eubigheim (DE); Radom, Leon, 74248 Ellhofen (DE); Öhrle, Joachim, 71083 Herrenberg (DE)
(74) Vertreter: Andrejewski - Honke Patent- und Rechtsanwälte Partnerschaft mbB

(56) Entgegenhaltungen:
- CH-A1- 712 963
- DE-A1- 10 227 192
- DE-A1- 19 634 922
- DE-A1-102011 078 499
- DE-U1- 29 612 117

## Beschreibung

Die vorliegende Erfindung betrifft eine Verbundmembran mit einem Elastomerkörper, der einen Umfangsrand mit einer Einspannfläche, einen Boden und einen den Umfangsrand mit dem Boden verbindenden biegsamen Membranabschnitt aufweist, wobei der Boden eine obere und eine untere Wandung aufweist und wobei ein Einsatz zumindest abschnittsweise zwischen der oberen und der unteren Wandung angeordnet ist. Demnach bilden die untere und obere Wandung eine Kammer aus, die dazu vorgesehen ist, den Einsatz aufzunehmen.

Verbundmembranen der eingangs beschriebenen Art können beispielsweise zur Kraftumwandlung von Differenzdrücken insbesondere bei Servoelementen, Stellantrieben, Bremskraftverstärkern oder dergleichen eingesetzt werden. Auch ein Einsatz in Druckminderern, Druckreglern oder Durchflussreglern ist möglich. Darüber hinaus eignen sie sich auch im Ventileinsatz zum Beispiel bei Überdruckventilen, Sicherheitsventilen, Absperrventilen oder Rückschlagventilen.

Bevorzugt sind derartige Verbundmembranen jedoch für den Pumpeneinsatz vorgesehen. Bei derartigen Pumpen kann es sich beispielsweise um Dosierpumpen, mechanische Pumpen, Membran-Kompressoren oder Vakuumpumpen handeln. Besonders geeignet ist der Einsatz in Membranpumpen, z. B. Druckluftmembranpumpen.

Derartige Verbundmembrane sind üblicherweise kreisrund ausgebildet und weisen eine tellerförmige Grundform auf. Vor diesem Hintergrund werden sie auch als Tellerformmembran bezeichnet. Die Erfindung ist aber nicht auf solche Ausgestaltungen beschränkt sondern betrifft auch Rollmembrane, Sickenformmembrane, Kalottenformmembrane und Flachmembrane. Die entsprechende Verbundmembran kann in einer Membranpumpe randseitig eingespannt werden, während der Boden der Verbundmembran Hubbewegungen ausführt, wobei mit jeder Hubbewegung der biegsame Membranabschnitt umgestülpt wird, so dass in einem radialen Schnitt Abrollbewegungen des biegsamen Materials beobachtet werden können. Vor diesem Hintergrund wird der biegsame Membranabschnitt im Stand der Technik auch als Rollschlaufe bezeichnet.

Der in dem Boden angeordnete Einsatz ist im Gegensatz zu dem Elastomerkörper aus einem unflexiblen bzw. formbeständigen Material gebildet, so dass der Boden selbst nicht an der Rollbewegung teilnimmt sondern lediglich über eine an dem Einsatz befestigte Kolbenstange die Hubbewegungen auf den biegsamen Materialabschnitt überträgt. Hierzu ist der Einsatz zwischen der oberen und unteren Wandung angeordnet, wobei sich die obere Wandung auf eine im bestimmungsgemäßen Gebrauch dem zu fördernden Medium zugewandte Wandung handelt. Entsprechend betrifft die hintere Wandung im bestimmungsgemäßen Gebrauch eine dem Medium abgewandte Wandung.

Aus der DE 19 634 922 A1 ist es auch bekannt, dass der Einsatz Teil einer Pleuelstange ist, welche unmittelbar durch hakenförmige Ausformungen in dem Elastomerkörper angeordnet werden können.

Der Elastomerkörper weist üblicherweise eine medienseitige Auflage aus Polytetrafluorethylen (PTFE) auf, um hierdurch eine chemische Beständigkeit gegenüber den geförderten Medien zu gewährleisten.

Der Elastomerkörper ist aus einem elastomeren Material gebildet, wobei üblicherweise Kautschuk verwendet wird und wobei der Einsatz in dem Elastomerkörper zur Ausbildung eines stabilen Haftverbundes einvulkanisiert ist. Um diesen Herstellungsprozess zu vereinfachen, kommen vermehrt thermoplastische Elastomere (TPE) für den Elastomerkörper zum Einsatz. Hierbei handelt es sich um Polymere, die im Normalzustand elastomere Eigenschaften aufweisen. Durch Wärmezufuhr lassen sie sich jedoch plastisch verformen und somit in nahezu jede erwünschte Form bringen.

Eine solche Ausgestaltung lehrt beispielsweise die US 2011/0311379 A1, wobei dann der Elastomerkörper aus dem thermoplastischen Elastomer um eine Einlage herum gespritzt ist. Insbesondere bei der Einbindung von thermoplastischen Elastomeren ist es allerdings problematisch, dass diese Materialien mit dem üblicherweise aus Metall gebildeten Einsatz ohne zusätzliches chemisches Haftsystem keine ausreichende Bindung eingehen. Gerade bei größeren Membrandurchmessern führen die hohen Flächenkräfte und -belastungen dazu, dass sich der Elastomerkörper aus thermoplastischem Elastomer von dem Einsatz löst. Hierbei kann diese Problematik grundsätzlich auch bei anderen Kunststoffmaterialien auftreten, wobei dies jedoch besonders bei thermoplastischen Elastomeren besonders problematisch ist. Durch das Ablösen des Elastomerkörpers kann darüber hinaus auch Druckluft in den hierdurch entstehenden Spalt zwischen dem Einsatz und dem Elastomerkörper eintreten, wodurch der zuvor genannte Prozess noch weiter beschleunigt wird und beispielsweise zu einem Ausreißen des Einsatzes führen kann. Eine ähnliche Ausgestaltung lehrt auch die CH 712 963 A1.

Gemäß der US 2011/0311379 A1 kann diese Problematik dadurch gelöst werden, dass der Elastomerkörper aus thermoplastischem Elastomer über eine zusätzliche Haftschicht an dem Einsatz befestigt wird. Darüber hinaus weist der Einsatz Durchbrüche auf, in die das flüssige Elastomer im Zuge der Herstellung eingespritzt wird, so dass insbesondere radiale Kräfte zu einem gewissen Maße ausgeglichen werden können. Diese Durchbrüche verhindern aber nicht, dass Druckluft in den Bereich zwischen dem Elastomerkörper und dem Einsatz eindringen kann bzw. können die Durchbrüche zumindest nicht wesentlich zu einer Verringerung der Luftmenge beitragen. Somit ist es ohne die zusätzliche Haftschicht nicht möglich, einen dauerhaften Verbund zwischen dem Elastomerkörper und dem Einsatz zu gewährleisten.

Die Einbindung einer solchen Haftschicht ist jedoch sowohl produktions- als auch kostenintensiv, so dass der vorliegenden Erfindung die Aufgabe zugrunde liegt, eine Verbundmembran anzugeben, die sich möglichst einfach herstellen lässt und zugleich eine ausreichende Widerstandsfähigkeit im laufenden Betrieb aufweist.

Lösung dieser Aufgabe und Gegenstand der Erfindung ist eine Verbundmembran für Membranpumpen gemäß Patentanspruch 1. Demnach erstreckt sich der Einsatz durch eine Öffnung in der unteren Wandung und umgreift die untere Wandung in einem Dichtungsabschnitt, wobei der Einsatz und die untere Wandung in dem Dichtungsabschnitt in Bezug auf eine parallel zur unteren Wandung wirkenden Kraft formschlüssig miteinander verbunden sind.

Durch die formschlüssige Verbindung im Dichtungsabschnitt wird erreicht, dass radial auf den Elastomerkörper wirkende Kräfte zu einem großen Maße bzw. vollständig über den Formschluss zwischen dem Einsatz und dem Elastomerkörper aufgenommen werden können. Hierdurch wird gewährleistet, dass die zwischen dem Elastomerkörper und dem Einsatz herstellungsbedingten Haltekräfte durch die radiale Belastung nicht überschritten werden und somit eine Ablösung des Elastomerkörpers von dem Einsatz verhindert wird.

Zugleich bilden der Einsatz und der Elastomerkörper in dem Dichtungsabschnitt durch den Formschluss eine Dichtgeometrie aus, wodurch der Eintritt von Druckluft wirksam verringert bzw. vollständig verhindert wird. Da die Öffnung üblicherweise im Mittelpunkt bzw. entlang einer Mittelachse der kreisrunden Verbundmembran angeordnet ist, liegt auch der Dichtungsabschnitt unmittelbar neben der Öffnung, so dass der Eintritt von Druckluft bereits frühzeitig verhindert werden kann. Hierbei ist zu beachten, dass sich zwischen dem Einsatz und dem Elastomerkörper im Querschnitt gesehen ausgehend von der Öffnung ein Kanal ausbildet, dessen Einlass sich auf der hinteren Wandung unmittelbar an der Öffnung befindet.

Um einen Formschluss und zugleich eine möglichst effektive Abdichtung zu gewährleisten, weist die untere Wandung in dem Dichtungsabschnitt eine die Öffnung umgebende angeordnete Verdickung auf, die beidseitig jeweils in eine Umfangsnut des Einsatzes eingreift. Demnach weist auch der Einsatz in den Bereichen der Verdickung eine beidseitige Umfangsnut auf. Hierbei ist zu bedenken, dass durch das Umgreifen des Elastomerkörpers, der Einsatz beidseitig an dem Elastomerkörper anliegt, so dass sich entsprechend jeweils zwei Seiten der unteren Wandung und des Einsatzes gegenüberliegen. Entsprechend bildet der Einsatz eine entlang der Umfangsrichtung verlaufende und in radiale Richtung geöffnete Ausnehmung auf, in der die untere Wandung zusammen mit der Verdickung angeordnet ist.

Durch die Kombination dieser Verdickungen und der Umfangsnut bzw. den Umfangsnuten wird einerseits der Formschluss erzielt, da diese Umfangsnuten in einer axialen Richtung hin geöffnet sind und somit eine Bewegung in radialer Richtung zwischen der unteren Wandung des Elastomerkörpers und dem Einsatz wirkungsvoll beschränken. Zugleich wird aber auch eine zusätzliche Abdichtung erzielt, da zwischen dem Elastomerkörper und dem Einsatz eindringende Druckluft den zusätzlichen Weg um die Verdickung herum zurücklegen muss, um in den Bereich des Einsatzes zu gelangen, welcher zwischen den Wandungen des Elastomerkörpers angeordnet und dessen Ablösung von dem Elastomerkörper besonders problematisch ist. Bei der beidseitigen Verdickung kommt ferner hinzu, dass bei Eintritt von Sperrluft die untere Wandung gegen den in der Kammer angeordneten Bereich des Einsatzes drückt, so dass hierdurch die wirkende Dichtungskraft zwischen dem zwischen den Wandungen angeordneten Teil des Einsatzes und der unteren Wandung des Elastomerkörpers erhöht wird. In diesem Zusammenhang kann daher auch von einer "aktiven Dichtungsgeometrie" gesprochen werden, da die wirkenden Dichtungskräfte mit zunehmendem Eintritt von Druckluft erhöht werden und sich somit auch die Dichteffektivität erhöht.

Besonders bevorzugt ist eine Ausgestaltung, bei der der Einsatz zumindest aus einem ersten und einem zweiten Einsatzkörper gebildet ist, wobei der erste Einsatzkörper im Wesentlichen bevorzugt aber vollständig innerhalb der zwischen den Wandungen des Bodens gebildeten Kammer angeordnet ist und der zweite Einsatzkörper an der unteren Wandung anliegt bzw. bevorzugt die untere Wandung umgreift. Durch die zweiteilige Ausgestaltung des Einsatzes kann der Formschluss zwischen dem Einsatz und dem Elastomerkörper in einfacher Art und Weise realisiert werden. Beispielsweise ist es möglich, dass der erste Einsatzkörper mit dem Elastomer des Elastomerkörpers umspritzt wird. Sodann kann der zweite Einsatzkörper auf der unteren Wandung des Bodens angeordnet und mit dem ersten Einsatzkörper befestigt werden. Durch den zweiten Einsatzkörper wird sichergestellt, dass die untere Wandung zwischen dem ersten und dem zweiten Körper angeordnet ist und insbesondere die Verdickung zur Ausbildung des Formschlusses in den Umfangsnuten des ersten und zweiten Einsatzkörpers gehalten wird.

Alternativ können auch erst die Einsatzkörper zueinander angeordnet und befestigt werden, wobei dann anschließend der Elastomerkörper durch einen Spritzvorgang gebildet wird. Das schmelzflüssige Elastomer dringt hierbei in den Zwischenraum zwischen den Einsatzkörpern ein, wobei insbesondere die Form der Einsatzkörper eine Art Spritzform bilden, so dass sich entsprechen die Verdickung im Elastomerkörper ausbilden kann.

Die Ausgestaltung des zweiteiligen Einsatzes kann grundsätzlich in verschiedener Art und Weise erfolgen. Beispielsweise kann der erste Einsatzkörper vollständig zwischen den Wandungen des Elastomerkörpers sein, wobei dann der zweite Einsatzkörper im Querschnitt T-förmig ausgebildet ist und mit einem in axialer Richtung verlaufenden Schenkel die Öffnung der unteren Wandung durchgreift. Alternativ kann auch der erste Einsatzkörper zu einem gewissen Maße gegenüber einer oberen Seite der unteren Wandung, welche an dem Einsatz anliegt, vorstehen, so dass dann der zweite Einsatzkörper scheibenförmig ausgebildet sein kann.

Die Verbindung der beiden Einsatzkörper erfolgt in bekannter Weise über eine Schraubverbindung, einen Presssitz oder über einen Formschluss, wobei im Falle einer Schraubverbindung der erste Einsatzkörper eine entlang der Mittelachse verlaufende Aussparung bzw. Durchbrechung mit einem Innengewinde aufweist und wobei dann ein T-förmiger zweiter Einsatzkörper mit einem in axialer Richtung verlaufenden Außengewinde in das Innengewinde des ersten Einsatzkörpers eingeschraubt ist. Bei dieser Durchbrechung handelt es sich bevorzugt um die einzige Durchbrechung in dem ersten Einsatzkörper. Sofern weitere Durchbrechungen außerhalb der Mittelachse vorgesehen sind, handelt es sich um Durchbrechungen, die einzig einer Verringerung des Gewichts des Einsatzkörpers dienen. Entsprechend bildet der Elastomerkörper im Bereich des Bodens keine zusätzlichen Wandungen oder Stege aus, die in den Durchbrechungen in dem ersten Einsatzkörper bzw. in dem Einsatz vorgesehen sind.

Die Ausgestaltung der Kammer bzw. der Wandungen des Bodens richtet sich nach der Form des Einsatzes bzw. des ersten Einsatzkörpers, wobei dieser bevorzugt eine halbellipsoide oder diskusförmige Grundform aufweist. Im Falle eines halbellipsoiden Einsatzkörpers weist auch die Kammer und der gesamte Boden im Querschnitt eine bogenförmige Kontur im Bereich der oberen Wandung auf. Die untere Wandung ist hingegen gerade ausgebildet oder im Falle einer diskusförmigen Ausgestaltung ebenfalls mit einer bogenförmigen Kontur.

Um auch hinsichtlich axialer Kräfte eine möglichst gute Verbundhaftung zwischen dem Einsatz und dem Elastomerkörper zu erzielen, ist ein weiterer Dichtungsabschnitt vorgesehen, der den Einsatz mit dem Elastomerkörper in Bezug auf eine in axialer Richtung wirkende Kraft formschlüssig miteinander verbindet. Bei diesen axialen Kräften kann es sich beispielsweise um Oberflächenkräfte handeln, welche über das zu fördernde Medium z. B. in Form eines Unterdrucks auf die obere Wandung des Bodens wirken. Bevorzugt sind daher die obere Wandung des Bodens und ein daran angrenzender Abschnitt des Einsatzes in Bezug auf diese axiale Kraft mit einem Formschluss ausgebildet.

Dies kann gemäß einer bevorzugten Ausgestaltung dadurch realisiert sein, der Einsatz auf einer an die obere Wandung angrenzenden Seite einen radial nach innen ragenden und in Umfangsrichtung verlaufenden Vorsprung aufweist, der bezüglich einer in axialer Richtung wirkenden Kraft mit einer oder mehreren radial vorstehenden Haltenasen des Elastomerkörpers formschlüssig zusammenwirkt. Die Haltenase des Elastomerkörpers ist ebenfalls bevorzugt als ein entlang der Umfangsrichtung verlaufender Vorsprung ausgebildet, so dass sich entsprechend die Vorsprünge des Elastomerkörpers und des Einsatzes hintergreifen und somit eine Bewegung des Elastomerkörpers in Bezug auf den Einsatz in vertikaler Richtung verhindern können.

Bevorzugt enthält der Einsatz ferner eine Anschlusseinrichtung für eine Kolbenstange, welche insbesondere bei einer zweiteiligen Ausbildung im zweiten Einsatzkörper bzw. an dem zweiten Einsatzkörper vorgesehen ist. Grundsätzlich kann ein Anschluss über eine Schraubverbindung, einen Presssitz oder einen Formschluss ermöglicht werden, wobei aber vor allem eine Schraubverbindung die bevorzugte Ausgestaltungsvariante darstellt, da die Kolbenstange so in einfacher Art und Weise lösbar mit der Verbundmembran verbunden werden kann. Die Anschlusseinrichtung ist bei einer zweiteiligen Ausgestaltung bevorzugt im zweiten Einsatzkörper vorgesehen, wobei dann ein axialer Abschnitt des zweiten Einsatzkörpers zumindest ein Innengewinde aufweist, wobei das Innengewinde der Aufnahme der Kolbenstange dient, welche entsprechend ein mit dem Innengewinde zusammenwirkendes Außengewinde aufweist. Grundsätzlich ist es aber auch denkbar, dass das Innengewinde in dem ersten Einsatzkörper vorgesehen ist.

Durch die formschlüssige Verbindung zwischen dem Einsatz und dem Elastomerkörper insbesondere in Kombination mit einer aktiven Dichtungsgeometrie kann erreicht werden, dass der Elastomerkörper bevorzugt aus einem thermoplastischen Polymer (TPE) gebildet sein kann.

Der Einsatz bzw. die Einsatzkörper sind bevorzugt aus einem Metall z. B. Aluminium, Kupfer, Stahl, insbesondere Edelstahl gebildet.

Im Folgenden wird die Erfindung anhand eines lediglich exemplarischen Ausführungsbeispiels näher erläutert. Es zeigen:
- Fig.1: die erfindungsgemäße Verbundmembran in einer Schnittdarstellung
- Fig. 2: eine Detailansicht des Bodens der Verbundmembran
- Fig. 3: das Funktionsprinzip der Verbundmembran im Vergleich zu einer Membran aus dem Stand der Technik
- Fig. 4: die Verbundmembran in einer isometrischen Ansicht

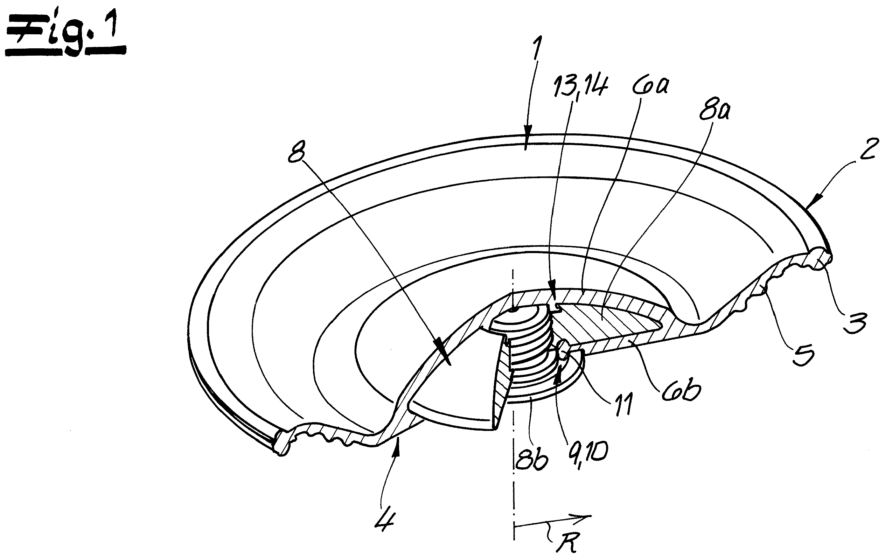

Die Fig. 1 zeigt die erfindungsgemäße Verbundmembran in einer Schnittdarstellung mit Blick auf die obere medienseitige Oberfläche. Die Verbundmembran weist einen Elastomerkörper 1 aus einem thermoplastischen Elastomer, einen Umfangsrand 2 mit einer Einspannfläche 3, einen Boden 4 und einen den Umfangsrand 2 mit dem Boden 4 verbindenden biegsamen Membranabschnitt 5 auf. Der Boden 4 ist aus einer oberen und einer unteren Wandung 6a, 6b gebildet, wobei die Wandungen 6a, 6b eine zwischen den Wandungen 6a, 6b angeordnete Kammer 7 ausbilden und wobei zwischen den Wandungen 6a, 6b ein Einsatz 8 in der Kammer 7 angeordnet ist.

Der Einsatz 8 erstreckt sich durch eine Öffnung 9 in der unteren Wandung 6b und umgreift in einem Dichtungsabschnitt 10 die untere Wandung 6b. Hierdurch können der Einsatz 8 und die untere Wandung 6b in dem Dichtungsabschnitt 10 in Bezug auf eine in radiale Richtung R wirkende Kraft formschlüssig miteinander verbunden werden.

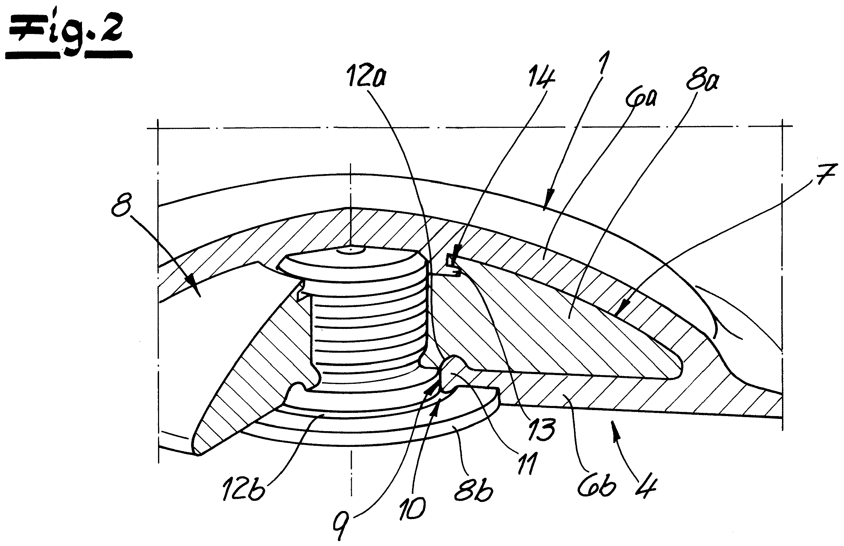

Die genaue Art und Weise der formschlüssigen Verbindung geht insbesondere aus der Detailansicht gemäß Fig. 2 deutlich hervor, in der lediglich der Boden 4 der Verbundmembran dargestellt ist. Deutlich zu erkennen ist hierbei, dass die untere Wandung 6b eine die Öffnung 9 umgebende Verdickung 11 aufweist, die beidseitig jeweils in eine Umfangsnut 12a, 12b des Einsatzes 8 eingreift.

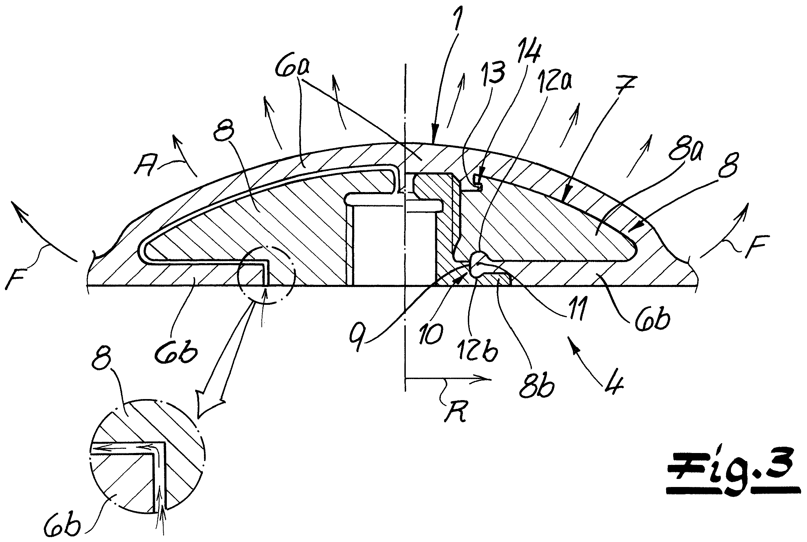

Die Funktionsweise einer solchen Dichtungsgeometrie geht insbesondere aus einer vergleichenden Darstellung mit der Fig. 3 hervor, wobei die linke Seite eine Verbundmembran aus dem Stand der Technik und die rechte Seite eine erfindungsgemäße Verbundmembran zeigt. Hierbei ist zu beachten, dass auch hier jeweils nur der Boden 4 dargestellt ist. Aufgrund der Hubbewegung der Verbundmembran werden Kräfte F hervorgerufen, welche insbesondere einen in radialer Richtung wirkenden Anteil aufweisen und im Falle einer Verbundmembran aus dem Stand der Technik zu einem Auseinanderspreizen zwischen dem Elastomerkörper 1 und dem Einsatz 8 führen. Hierdurch wird ein Kanal zwischen diesen beiden Bauteilen gebildet, in die Druckluft eindringen kann, was aus der hervorgehobenen Detailansicht deutlich hervorgeht. Zugleich wirken auch noch Oberflächenkräfte A, welche insbesondere ein Ablösen der oberen Wandung 6a mit dem Einsatz 8 verursachen können. Hierdurch wird der Kanal immer größer, so dass die Druckluft in weite Bereiche zwischen Einsatz 8 und Elastomerkörper 1 eindringen und zu einem Bauteilversagen führen kann.

Durch die formschlüssige Verbindung in dem Dichtungsabschnitt 10 wird selbst bei dem Einwirken einer radialen Kraft F der Verbund zwischen Einsatz 8 und Elastomerkörper 1 stets gewährleistet, so dass sich der für die Druckluft wirkende Kanal im Betrieb nicht vergrößern kann. Zugleich wirkt die Verdickung 11 zusammen mit den Umfangsnuten 12a, 12b als aktive Dichtungsgeometrie, so dass selbst bei einem Eindringen von Druckluft der Kanal zwischen dem Einsatz 8 und dem Elastomerkörper 1 frühzeitig versperrt wird.

Um darüber hinaus auch ein Ablösen zwischen der oberen Wandung 6a und dem Einsatz 8 im ausreichenden Maße zu verhindern, z. B. durch die Oberflächenkräfte A, weist der Einsatz 8 an der oberen Wandung 6a des Bodens 4 eine Umfangsnut 14 auf, wobei eine entlang der Umfangsrichtung verlaufende Haltenase 13 des Elastomerkörpers 1 in die Umfangsnut 14 eingreift.

Anhand der Fig. 1 und 2 wird ferner deutlich, dass der Einsatz 8 zweiteilig ausgebildet ist und einen ersten Einsatzkörper 8a und einen zweiten Einsatzkörper 8b aufweist, wobei der erste Einsatzkörper 8a vollständig innerhalb der Kammer 7 angeordnet und über eine Schraubverbindung mit dem zweiten Einsatzkörper 8b verbunden ist. Hierbei liegt die untere Wandung 6b im Dichtungsabschnitt 10 zwischen den beiden Einsatzkörpern 8a, 8b, wobei die jeweils in den Einsatzkörpern 8a, 8b gebildeten Umfangsnuten 12a, 12b die Verdickung 11 formschlüssig halten.

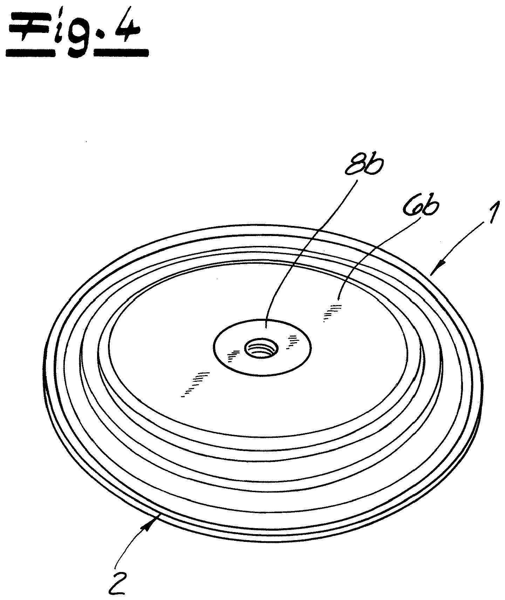

Gemäß der Fig. 4 wird ferner deutlich, dass der zweite Einsatzkörper 8b ein Innengewinde zur Aufnahme und Verbindung einer Kolbenstange aufweist und dass der zweite Einsatzkörper 8b bündig mit der unteren Wandung 6b an einer unteren Seite abschließt.

## Patentansprüche

1. Verbundmembran für Membranpumpen mit einem Elastomerkörper (1), der einen Umfangsrand (2) mit einer Einspannfläche (3), einen Boden (4) und einen den Umfangsrand (2) mit dem Boden (4) verbindenden biegsamen Membranabschnitt (5) aufweist, wobei der Boden (4) eine obere und eine untere Wandung (6a, 6b) aufweist und ein Einsatz (8) zumindest abschnittsweise zwischen den Wandungen (6a, 6b) angeordnet ist,
**dadurch gekennzeichnet, dass**
sich der Einsatz (8) durch eine Öffnung (9) in der unteren Wandung (6b) erstreckt und die untere Wandung (6b) in einem Dichtungsabschnitt (10) umgreift, wobei der Einsatz (8) und die untere Wandung (6b) in dem Dichtungsabschnitt (10) in Bezug auf eine in radialer Richtung (R) wirkenden Kraft formschlüssig miteinander verbunden sind, wobei die untere Wandung (6b) in dem Dichtungsabschnitt (10) eine die Öffnung (9) umgebende Verdickung (11) aufweist, die beidseitig jeweils in eine Umfangsnut (12a, 12b) des Einsatzes (8) eingreift.

2. Verbundmembran nach Anspruch 1, **dadurch gekennzeichnet, dass** der Einsatz (8) zumindest aus einem ersten und einem zweiten Einsatzkörper (8a, 8b) gebildet ist, wobei der erste Einsatzkörper (8a) im Wesentlichen innerhalb einer zwischen den Wandungen (6a, 6b) gebildeten Kammer (7) angeordnet ist und der zweite Einsatzkörper (8b) an der unteren Wandung (6b) anliegt.

3. Verbundmembran nach Anspruch 2, **dadurch gekennzeichnet, dass** die Einsatzkörper (8a, 8b) miteinander verbunden sind.

4. Verbundmembran nach einem der Ansprüche 1 bis 3, **dadurch gekennzeichnet, dass** die oberen Wandung (6a) des Bodens (4) und ein daran angrenzender Abschnitt des Einsatzes (8) in Bezug auf eine in axialer Richtung (Z) wirkenden Kraft (A) formschlüssig miteinander verbunden sind.

5. Verbundmembran nach Anspruch 4, **dadurch gekennzeichnet, dass** der Einsatz (8) auf einer an die obere Wandung (6a) angrenzenden Seite einen radial nach innen ragenden und in Umfangsrichtung verlaufenden Vorsprung aufweist und wobei eine oder mehrere radial vorstehenden Haltenasen (13) des Elastomerkörpers (1) den Vorsprung des Einsatzes in axialer Richtung (Z) hintergreifen.

6. Verbundmembran nach Anspruch 5, **dadurch gekennzeichnet, dass** die Haltenase (13) in axialer Richtung (Z) zwischen Abschnitten der oberen Wandung (6a) angeordnet sind.

7. Verbundmembran nach einem der Ansprüche 1 bis 6, **dadurch gekennzeichnet, dass** der Einsatz (8) eine Anschlusseinrichtung für eine Kolbenstange enthält.

8. Verbundmembran nach einem der Ansprüche 1 bis 7, **dadurch gekennzeichnet, dass** der Elastomerkörper (1) aus einem thermoplastischen Polymer (TPE) gebildet ist.

9. Verbundmembran nach Anspruch 8, **dadurch gekennzeichnet, dass** das thermoplastische Polymer thermoplastisches Polyurethan (TPU) ist.

## Claims

1. A composite membrane for membrane pumps with an elastomer body (1), which comprises a peripheral edge (2) with a gripping surface (3), a bottom (4) and a flexible membrane section (5) connecting the peripheral edge (2) to the bottom (4), wherein the bottom (4) comprises an upper and a lower wall (6a, 6b) and an insert (8) is arranged at least in sections between the walls (6a, 6b),
**characterised in that**
the insert (8) extends through an opening (9) in the lower wall (6b) and engages around the lower wall (6b) in a sealing section (10), wherein the insert (8) and the lower wall (6b) are connected to one another in a form-fit manner in the sealing section (10) relative to a force acting in a radial direction (R), and wherein the lower wall (6b) comprises in the sealing section (10) a thickened portion (11) surrounding the opening (9), which engages on both sides in a peripheral groove (12a, 12b) of the insert (8).

2. The composite membrane according to claim 1, **characterised in that** the insert (8) is formed at least from a first and a second insert body (8a, 8b), wherein the first insert body (8a) is arranged essentially inside a chamber (7) formed between the walls (6a, 6b) and the second insert body (8b) abuts against the lower wall (6b).

3. The composite membrane according to claim 2, **characterised in that** the insert bodies (8a, 8b) are connected to one another.

4. The composite membrane according to any one of claims 1 to 3, **characterised in that** the upper wall (6a) of the bottom (4) and a section of the insert (8) abutting against the latter are connected together in a form-fit manner relative to a force (A) acting in the axial direction (Z).

5. The composite membrane according to claim 4, **characterised in that** the insert (8) comprises a projection projecting radially inwards and running in the peripheral direction on a side abutting against the upper wall (6a) and wherein one or more radially projecting retaining lugs (13) of the elastomer body (1) engage behind the projection of the insert in the axial direction (Z).

6. The composite membrane according to claim 5, **characterised in that** the retaining lugs (13) are arranged in the axial direction (Z) between sections of the upper wall (6a).

7. The composite membrane according to any one of claims 1 to 6, **characterised in that** the insert (8) contains a connecting device for a piston rod.

8. The composite membrane according to any one of claims 1 to 7, **characterised in that** elastomer body (1) is formed from a thermoplastic polymer (TPE).

9. The composite membrane according to claim 8, **characterised in that** the thermoplastic polymer is thermoplastic polyurethane (TPU).

## Revendications

1. Membrane composite pour pompes à membrane comprenant un corps élastomère (1) qui présente un bord périphérique (2) avec une face de serrage (3), un fond (4) et un tronçon de membrane (5) flexible reliant le bord périphérique (2) avec le fond (4), dans lequel le fond (4) présente une paroi supérieure et une paroi inférieure (6a, 6b) et un insert (8) est disposé au moins par tronçons entre les parois (6a, 6b),
**caractérisée en ce que**
l'insert (8) s'étend à travers une ouverture (9) dans la paroi inférieure (6b) et entoure la paroi inférieure (6b) dans un tronçon d'étanchéité (10), dans lequel l'insert (8) et la paroi inférieure (6b) sont reliés entre eux par complémentarité de formes dans le tronçon d'étanchéité (10) par rapport à une force agissant dans le sens radial (R), dans lequel la paroi inférieure (6b) présente dans le tronçon d'étanchéité (10) un épaississement (11) entourant l'ouverture (9) qui se met en prise de chaque côté dans une rainure périphérique (12a, 12b) de l'insert (8).

2. Membrane composite selon la revendication 1, **caractérisée en ce que** l'insert (8) est formé au moins d'un premier et d'un deuxième corps d'insert (8a, 8b), dans lequel le premier corps d'insert (8a) est disposé essentiellement à l'intérieur d'une chambre (7) formée entre les parois (6a, 6b) et le deuxième corps d'insert (8b) repose sur la paroi inférieure (6b).

3. Membrane composite selon la revendication 2, **caractérisée en ce que** les corps d'insert (8a, 8b) sont reliés entre eux.

4. Membrane composite selon l'une des revendications 1 à 3, **caractérisée en ce que** la paroi supérieure (6a) du fond (4) et un tronçon délimité dessus de l'insert (8) sont reliés entre eux par complémentarité de formes par rapport à une force (A) agissant dans le sens axial (Z) .

5. Membrane composite selon la revendication 4, **caractérisée en ce que** l'insert (8) présente sur un côté délimité sur la paroi supérieure (6a), une saillie faisant saillie radialement vers l'intérieur et passant dans le sens périphérique, et dans lequel un ou plusieurs ergot(s) de retenue (13) du corps élastomère (1) radialement en saillie prennent par l'arrière la saillie de l'insert dans le sens axial (Z).

6. Membrane composite selon la revendication 5, **caractérisée en ce que** les ergots de retenue (13) sont disposés dans le sens axial (Z) entre des tronçons de la paroi supérieure (6a).

7. Membrane composite selon l'une des revendications 1 à 6, **caractérisée en ce que** l'insert (8) contient un dispositif de raccordement pour une tige de piston.

8. Membrane composite selon l'une des revendications 1 à 7, **caractérisée en ce que** le corps élastomère (1) est fabriqué dans un polymère thermoplastique (TPE).

9. Membrane composite selon la revendication 8, **caractérisée en ce que** le polymère thermoplastique est du polyuréthane thermoplastique (TPU).
